# EUROPEAN PATENT APPLICATION

(11) **EP 4 184 003 A1**
(43) Date of publication of application: **24.05.2023**
(21) Application number: 20844603.9
(22) Date of filing: 20.07.2020
(51) Int. Cl.: F03B 17/06, F03B 13/26

(54) **SYSTEM FOR GENERATING ELECTRICAL POWER AT THE SURFACE BY HARNESSING THE KINETIC ENERGY OF OCEAN AND RIVER CURRENTS**

(71) Applicant: Barranco Perán, Miguel, 18014 Granada (ES)
(72) Inventor: BARRANCO LOPEZ, Miguel, 18014 Granada (ES)
(74) Representative: Sahuquillo Huerta, Jesús
(86) International application number: PCT/ES2020/070468
(87) International publication number: WO 2021/014042

(57) **Abstract**

Apparatus for obtaining electrical energy on the surface from the capture of the kinetic energy of currents in seas and rivers, comprising at least one paddle (2) made entirely of silicon which is submerged under the surface (s) of a fluvial or marine water current and mechanically linked to a floating platform (3) by means of at least one shaft (4) on which the paddle (2) rotates in both directions in the same way when moved by the fluvial or marine current, in the same manner and independently of the change of direction of the river or sea current; and wherein the shaft (4) is associated at the bottom with at least one tensioning cable (5) configured to maintain the paddle (2) in a transverse position to the flow of the river or marine current and, at its upper end, with a hydraulic pump (6) located on the floating platform (3) configured to transmit the kinetic energy impressed by the river or marine current on the shaft (4) through the blade (2) to a dynamo (7) mechanically linked to said shaft (4) to convert the kinetic energy into electrical energy.

## Description

### Object of the invention

The invention, as expressed in the wording of the present descriptive report, refers to a apparatus for obtaining electrical energy on the surface by capturing the kinetic energy of water currents in rivers and/or sea currents. More specifically, the object of the invention consists of a device that, based on the installation of at least one vertical turbine whose shafts are coupled to cables that tension weights submerged under a floating platform that is configured to collect the kinetic energy of the current of the river or marine current that moves the blades.

### Technical field of the invention

The present invention is part of the energy industry sector, focusing particularly on the field of the industry dedicated to the manufacture and installation of apparatus, devices, and apparatus for the use of clean energies and the generation of electrical energy, more particularly those applicable to the use of the kinetic energy of river and sea currents.

### Background to the invention

The need to seek clean energy that does not disturb ecosystems and does not pollute directly or visually makes it necessary to study and develop new procedures and systems to obtain clean, non-polluting energy more cheaply and in a way that is more respectful of flora, fauna, and the environment than that offered by state-of-the-art systems.

In the current state of the art, there are two systems for obtaining clean energy: solar energy and wind energy. However, both disturb the flora, fauna, and aesthetic appearance of the ecosystems they invade. For example, solar panels, which are generally used on large fields, invade the spaces occupied by flora and fauna that are displaced from their habitat and, of course, aesthetically damage the spaces and landscapes.

Wind farms are particularly damaging to the environment. Firstly, they damage the terrain, as the materials, which are large and heavy, have to be transported to the site. These materials require special access through fields and mountains, which means that roads must be created for their maintenance and upkeep, thus damaging nature and the landscape. They also damage the habitat of birds, as some of them are killed by the effects of the wind turbine blades. Wind farms themselves are industrial installations that damage flora and fauna by creating human traffic spaces that displace animals and destroy part of the surrounding flora.

With reference to the current state of the art, offshore wind systems are known, with a high economic cost - 50 million Euros per wind turbine - and where each wind turbine weighs approximately 150 Tm. This generates a serious environmental problem due to the intensive use of glass fibre that will arise when the wind turbines have to be replaced at the end of their useful life.

On the other hand, these two energy sources depend on nature to work and capture energy. They depend on the hours of sunshine, on the absence of clouds, on the absence of rain, on the existence of wind in the right quantity and at the right speed. There is an energy capture that depends on the climatology itself, and that is studied in terms of statistics, of climatological data which, on the other hand, can vary over time.

Other systems known in the state of the art are those that use submerged turbines, which work in a similar way to wind energy, but generate electricity underwater. The energy potential of water is much greater than that of air, but the generation of electricity underwater plus the anchoring infrastructure on the seabed limit and condition electricity production. Research in some models is limited to the "gearbox", when it must be considered that the energy to be produced is proportional to the diameter of the blades, so that the optimisation of the performance provided by a turbine only acts on the natural loss produced in the "transformation" of kinetic energy into electrical energy.

Other well-known systems are oscillating kites, helical turbines - Archimedes' screw -, wave motion, etc. They have the same or more disadvantages than the previous ones and less efficiency. They have the same or more disadvantages as the previous ones and less performance. They are being experimented with, but do not seem likely to be sustainable, let alone profitable.

### Description of the invention

The subject matter of the present invention is an apparatus for obtaining surface electrical energy from the capture of the kinetic energy of currents in seas and rivers according to claim 1. Particular and preferred embodiments of the apparatus of the invention are described in the dependent claims. The object of the present invention is based on the Inverter Drill Bit, changing the motor that produces the drilling energy at the surface, for an electric generator or "dynamo". The dynamo is driven by turbines that rotate on a flexible shaft (stainless steel cable), anchored to the seabed. The axial cable must remain vertical, sufficiently taut to support the thrust of the water on the turbine, which is achieved by regulating the weight of the mooring and the flotation platform from the surface. The diameter and length of the turbine, plus the speed of the current, determine the energy volume to be achieved.

One of the advantages of the invention is that the assembly is simple, which facilitates the maintenance of the system, which allows the exchange of each and every one of its components, which will facilitate the optimisation of energy performance. The use of sea currents is done in an integral way, from the surface to the deep ones, even if they are conflicting or alternating, such as those produced by the tides. For example, in the Strait of Gibraltar, with a depth of up to 900m and with conflicting currents, the greatest energy capacity is found off the coast of Morocco. The currents of the Gulf of Mexico, with widths ranging from 80 km and 640m depth in Cuba to more than 1000km with depths of 800 to 1200m in the rest, and an average speed of 1.8m/s, which moves on the surface and disappears at a depth of 100m. Highly productive alternating tidal currents occur at the mouths of the estuaries and bays. The energy volume, intensity and frequency of the electricity produced by the system of the Invention is homogeneous and permanent, as are the currents that produce it.

As is well known, river courses, like surface or submerged sea currents, are bodies of water with a specific density, with constant or variable speeds, as well as directional changes, and are therefore potentially energy carriers that can be used in an appropriate manner. Therefore, the aim of the present invention lies in the adaptation of the way of obtaining this energy.

Specifically, what the invention proposes, as noted above, is a device which, applicable for installation in river or marine sites, is designed to harness the kinetic energy caused by the flow of river and marine water currents under the surface, It is essentially based on the installation of a set of vertical turbines (in the form of an inverted drill bit) submerged under a floating platform to which they are linked by means of their shafts, These, in turn, are attached to cables that hold underwater weights under the blades under tension. On the platform, attached to the shafts of each blade, there is a hydraulic pump to collect the kinetic energy of the river or marine current that moves the blades and, by the most appropriate means, to take it to a dynamo converted into electrical energy, from where it can be transported for use.

In this way, only mechanical elements are submerged in the water, made of materials compatible with the marine environment, with a density slightly lower than that of water, with the exception of the weights, logically, to achieve buoyancy to facilitate their maintenance and to avoid having to work underwater. More specifically, in the preferred embodiment of the apparatus of the invention, a floating platform is contemplated, with two, four or more cables with natural tensors, which allow, depending on the tides, to keep the cables tensioned with weights, in such a way that maritime soil is not affected, either because it is not necessary to reach them or by arranging them on the river bed in the case of rivers, but so that their removal, if considered necessary, would not leave any trace. These cables support the shafts on which the turbines are arranged, designed to rotate in the same way in one direction or another, even if the direction of the current varies, and which rotate, the shafts, attached to them, in such a way that they transfer the kinetic energy to the surface to a hydraulic pump coupled to them on the floating platform. This platform, in turn, incorporates the means to collect, by the most appropriate procedure, this energy in a dynamo, in order to be able to transport it.

Preferably, a platform will have four shafts of the appropriate length, depending on the location where it is installed, where the blades rotate to raise the kinetic energy of the current to four hydraulic pumps, one coupled to the upper end of each shaft, on the platform, which optimise the speed of the blades, to transfer it to a hydraulic motor and, from this, to the dynamo, and in this way achieve greater production of electrical energy. In addition, preferably, the platform has a cover that completely covers and protects the functional elements of the apparatus provided on it, which is preferably hemispherical and has an access system, being designed to not allow the entry of water inside and, optionally, it will carry additional elements of location and signalling that are necessary for marine and navigational instances.

Finally, as mentioned in previous sections, the apparatus of the invention is designed so that, in addition to allowing the generation of clean energy, it can also act as a protective element for marine fauna and flora, especially, for example, for endangered species such as Posidonia, as it would act as a barrier to trawling, whether it is in operation or not.

Throughout the description and the claims, the word "comprises", and variants thereof are not intended to exclude other technical features, additives, components, or steps. To those skilled in the art, other objects, advantages, and features of the invention will be apparent in part from the invention and in part from the practice of the invention. The following examples and drawings are provided by way of illustration and are not intended to restrict the present invention. Furthermore, the invention covers all possible combinations of particular and preferred embodiments indicated herein.

### Brief description of the figures

The following is a very brief description of a series of drawings which help to better understand the invention, and which relate expressly to an embodiment of the invention, which is illustrated as a non-limiting example of the invention.

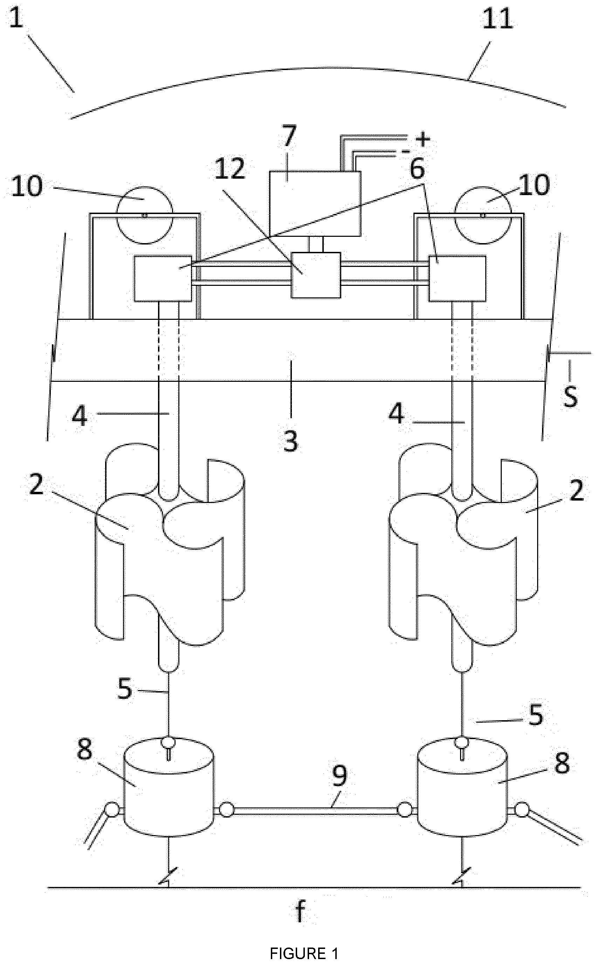

Figure 1.- Shows a schematic view of an example of the apparatus for obtaining electrical energy on the surface from the capture of the kinetic energy of river water and marine currents that is the subject of the invention, showing the main parts and elements it comprises, as well as the configuration and arrangement of these, both on the surface and below it.

### Detailed description of an embodiment of the invention

As shown in Figure 1 , the apparatus (1) in question, applicable for installation in river or marine locations to harness the kinetic energy caused by the flow of river and marine water currents under or on the surface, comprises, essentially, one or more blades (2) or turbines submerged under a floating platform (3) to which they are linked by means of shafts (4) on which the blades (2) rotate as they are moved by the current, and on cables (5) which hold the blades (2) in place against the thrust of the current, and at their upper end, to a hydraulic pump (6) located on the floating platform (3), which, in turn, by means of for example a hydraulic motor (12), transfers the kinetic energy, which is impressed by the current on the shafts (4) through the blades (2), to a dynamo (7) linked to the same to convert it into electrical energy.

The cables (5) tensioning ropes that hold the blades (2) in place under the floating platform (3), are tensioned by means of weights (8) provided at the lower end thereof. Optionally, the weights (8), in turn, may be attached by means of modular anchors (9) to the seabed or riverbed, as appropriate.

The blades (2) may be attached with vertical tensioning cables (5), as shown in the example in figure 1, or inclined, for example inclined in pairs, forming a grid which, in turn, and as appropriate, are anchored to the bottom with modular anchors (9), allowing for tidal fluctuation. In the preferred embodiment of the invention, the floating platform (3) comprises four blades (2) with four shafts (4) attached to four tensioning cables (5), which may be attached with weights (8) that do not reach the bottom, or with natural elements, so as not to affect the sea floor. In any case, optionally, the tensioning cables (5) are inserted inside the shafts (4), and, at their upper end, they are joined to a tensioner collector (10) that allows them to be lifted for maintenance or replacement operations.

On the other hand, also preferably, the blades (2) are designed so that they always go in the same direction, even if they are opposite or opposing, and may have the shape shown in the drawings or any other shape. In addition, preferably, the floating platform (3) incorporates a cover (11) that completely covers and protects the functional elements of the apparatus provided on it. This cover (11), which in the preferred embodiment is hemispherical and has an access, does not allow water to enter inside it and, optionally, incorporates additional location and signalling elements. In the example shown in figure 1, the floating platform (3) is arranged on the surface (s) of the water, with the blades (2) submerged under the water and the weights (8) located at a certain distance from the bottom (f), attached to it by means of anchors (10).

One of the essential characteristics of the system is that the blades (2) are made of silicone, flexible like the tail and fins of fish, because no animal or mineral matter adheres to the silicone. In addition, the flexibility optimises energy efficiency by increasing the thrust surface and decreasing the resistance surface. Finally, silicone is a non-degradable material, so it is durable and non-polluting.

The apparatus of the invention does not require any kind of permanent infrastructure attached to the bottom, such as wind systems. The simplicity of assembly, testing and maintenance makes it unique and different from the apparatus described in the state of the art. The transformation of the kinetic energy of the water into electrical energy is done on the surface (not submerged). Each "kinetic generation column" formed by the turbines installed along the "rotating auger", drives a hydraulic (water) pump that operates the electric generator that can be responsible for more than one pump. The wastewater flow, once the dynamo has been driven, is used to create a spray column that serves two functions: signalling of maritime traffic and stimulation of evaporation. In addition, the system of the invention is fully reversible.

## Claims

1. An apparatus for obtaining electrical energy on the surface from the capture of the kinetic energy of currents in seas and rivers, **characterised in that** it comprises at least one paddle (2) made entirely of silicon which is submerged under the surface (s) of a river or sea water current and mechanically linked to a floating platform (3) by means of at least one shaft (4) on which the paddle (2) rotates in both directions in the same way when moved by the river or sea current, in the same manner and irrespective of the change of direction of the river or sea current; and wherein the shaft (4) is associated at the bottom with at least one tensioning cable (5) configured to maintain the paddle (2) in a transverse position to the flow of the river or marine current and, at its upper end, with a hydraulic pump (6) located on the floating platform (3) configured to transmit the kinetic energy impressed by the river or marine current on the shaft (4) through the blade (2) to a dynamo (7) mechanically linked to said shaft (4) to convert the kinetic energy into electrical energy.

2. The apparatus according to claim 1 where the tensioning cable (5) that holds the paddle (2) in place under the floating platform (3) is tensioned by means of at least one weight (8) provided at the lower end of the same.

3. The apparatus according to claim 2 where the weight (8) is attached by means of a modular anchor (9) to the seabed or riverbed, allowing for tidal fluctuation.

4. The apparatus according to any one of claims 1 to 3 wherein the blade (2) is attached by means of a vertical or inclined tensioning cable (5).

5. The apparatus according to any one of claims 1 to 4, comprising a tensioning device (10) connected to a tensioning cable (5) inserted in the shaft (4).

6. The apparatus according to any one of claims 1 to 4 wherein the floating platform (3) incorporates a watertight cover (11) that completely covers said floating platform (3) and incorporates a single access or manhole.
